# EUROPÄISCHE PATENTSCHRIFT

(11) **EP 2 220 879 B1**
(45) Veröffentlichungstag und Bekanntmachung des Hinweises auf die Patenterteilung: **12.09.2018**
(21) Anmeldenummer: 08859359.5
(22) Anmeldetag: 15.10.2008
(51) Int. Cl.: H04W 74/08, H04W 76/50, H04W 8/18, H04W 48/06, H04W 76/10

(54) **VERFAHREN ZUM AUFBAU VON PRIORISIERTEN ANKOMMENDEN ANRUFEN IN ÜBERLASTSITUATIONEN IN EINEM MOBILFUNKNETZWERK**
METHOD FOR CONNECTING PRIORITIZED INCOMING CALLS IN OVERLOAD SITUATIONS IN A MOBILE COMMUNICATIONS NETWORK
PROCÉDÉ D'ÉTABLISSEMENT D'APPELS ENTRANTS PRIORITAIRES DANS DES SITUATIONS DE SURCHARGE DANS UN RÉSEAU DE TÉLÉPHONIE MOBILE

(30) Priorität: 12.12.2007 DE 102007060377
(43) Veröffentlichungstag der Anmeldung: 25.08.2010
(73) Patentinhaber: Deutsche Telekom AG, 53113 Bonn (DE)
(72) Erfinder: SCHMITT, Harald, 56170 Bendorf (DE)
(74) Vertreter: Cohausz Hannig Borkowski Wißgott
(86) Internationale Anmeldenummer: PCT/EP2008/008701
(87) Internationale Veröffentlichungsnummer: WO 2009/074186

(56) Entgegenhaltungen:
- WO-A2-2004/072784
- US-A1- 2007 238 454
- ANONYMOUS: "Study on Paging Permission with Access Control (Release 8)" 3RD GENERATION PARTNERSHIP PROJECT (3GPP); TECHNICAL SPECIFICATION GROUP SERVICES AND SYSTEM ASPECTS, [Online] 1. Dezember 2007 (2007-12-01), XP002518936 France Gefunden im Internet: URL:http://www.arib.or.jp/IMT-2000/V700Sep 08/3_T12/ARIB-TR-T12/Rel8/22/A22908-810.pd f> [gefunden am 2009-03-11]

## Beschreibung

Die Erfindung betrifft ein Verfahren zum Aufbau einer Mobilfunkverbindung in einem Mobilfunknetz, insbesondere in einem zellularen Mobilfunknetz im Falle einer wegen Überlast temporär eingeschränkten Mobilfunknetzwerkzugänglichkeit oder Mobilfunknetzwerkverfügbarkeit, zwischen einem priorisierten ersten Mobilfunkendgerät und einem nicht priorisierten zweiten Mobilfunkendgerät, wobei nicht priorisierte Mobilfunkendgeräte zumindest teilweise und zumindest temporär aufgrund der Überlastsituation gesperrt sind, bei welchem das erste, priorisierte Mobilfunkendgerät einen Rufaufbauversuch sendet, das Mobilfunknetz den Rufaufbauversuch als priorisierten Rufaufbauversuch erkennt und gegenüber Rufaufbauversuchen anderer nicht priorisierter Mobilfunkendgeräte bevorzugt und an das zweite, nicht priorisierte Mobilfunkendgerät übermittelt.

Öffentliche zellulare Mobilfunknetze wie GSM (Global System for Mobile Communication) oder UMTS-Netze (Universal Mobil Telecommunication System) besitzen prinzipbedingt begrenzte Kommunikationsressourcen. Im Allgemeinen sind diese Netze derart ausgelegt, dass das durchschnittliche Kommunikationsaufkommen einschränkungslos gewährleistet werden kann. Aufgrund besonderer Situationen kann es jedoch dazu kommen, dass ein überdurchschnittlich hohes Aufkommen von Kommunikationswünschen eine Auslastung dieser Mobilfunknetze regional oder sogar global herbeiführt. Dies ist beispielsweise bei Großveranstaltungen oder Sportereignissen wie Weltmeisterschaften oder Olympiaden oder auch in Katastrophensituationen, beispielsweise ausgelöst durch Naturkatastrophen der Fall. In derartigen Situationen können die Netzkapazitäten überlastet werden. Die Mobilfunknetzwerke sind daher derart eingerichtet, dass bei nahezu oder vollständig ausgenutzten Ressourcen weitere Gesprächsanforderungen abgelehnt werden.

Insbesondere in den genannten Situationen ist es jedoch hilfreich und teilweise auch erforderlich, dass bestimmte Mobilfunkteilnehmer wie Rettungskräfte, Polizei, Feuerwehr, aber auch Bedienstete des das Mobilfunknetz betreibenden Mobilfunkunternehmens auch bei ausgelasteten Netzen einen sicheren Netzzugang erhalten. Dabei ist zu differenzieren, dass diese ausgewählten Mobilfunkteilnehmer zum einen ihren Zugangswunsch zum Mobilfunknetz übermitteln können und nicht bereits für einen Zugang vom Netzwerk gesperrt sind oder abgewiesen werden und zum anderen die für den Aufbau einer Telekommunikationsverbindung notwendigen Ressourcen, beispielsweise einen freien Kanal, zugewiesen bekommen.

In GSM und UMTS-Netzen besteht die Möglichkeit, ausgewählte Mobilfunkendgeräte, also bestimmte Teilnehmer, gegenüber anderen zu priorisieren. Priorisierte Mobilfunkendgeräte bzw. Teilnehmer werden in Überlastsituationen in einem Mobilfunknetz gegenüber nicht priorisierten Mobilfunkendgräten bzw. Teilnehmern bevorzugt behandelt. Dadurch ist es diesen Teilnehmern möglich, auch in Überlastsituationen Gespräche aufzunehmen. Für die technische Umsetzung derartiger Priorisierungen sind verschiedene Verfahren und Standards bekannt, die von dem 3GPP (3rd Generation Partnership Project) erarbeitet worden sind.

Um Überlastsituationen in einem Mobilfunknetz abzuwehren wird in GSM und UMTS Mobilfunknetzen eine so genannte "Access Class Barring" Funktion eingesetzt, Sie regelt, dass es bestimmten Mobilfunkendgeräten erlaubt bzw. verboten ist, auf das Mobilfunknetz zuzugreifen. Hier werden Zugriffsklassen (Access Klassen) definiert und den Endgeräten zugeordnet. Nach dem Standard 3GPP TS 22.011 sind 16 derartiger Access Klassen vorgesehen. Die Access Klasse eines Teilnehmers wird auf der SIM (Subscriber Identity Module) oder USIM (Universal Subscriber Identity Module)- Karte des Endgerätes hinterlegt. Klassen 0 bis 9 sind für die gewöhnlichen Teilnehmer vorgesehen, Klassen 11 bis 15 besonderen Teilnehmern vorbehalten. So ist beispielsweise Klasse 12 für Sicherheitsdienste, Klasse 13 für öffentliche Versorgungseinrichtungen wie Wasser- Strom- oder Gasversorger, Klasse 14 für Rettungsnotdienste wie Polizei und Feuerwehr und Klassen 11 und 15 für Bedienstete des Mobilfunknetzbetreibers reserviert. Es besteht die Möglichkeit, dass ein Mobilfunkendgerät bzw. Teilnehmer eine Zuordnung sowohl zu einer der Klassen 0 bis 9 als auch zu einer der Sonderklasse 11 bis 15 besitzt. Klasse 10 erlaubt Notrufe und ist jeder SIM/USIM -Karte zugeordnet. Ein Mobilfunkbetreiber ist gehalten, bei der Vergabe der SIM/USIM -Karten darauf zu achten, dass die Verteilung der einzelnen Access Klassen 0 bis 9 mehr oder weniger gleich verteilt erfolgt.

Überlastsituationen werden nunmehr dadurch bekämpft, dass die Access Klassen 0 bis 9 nach dem Zufallsprinzip gesperrt werden, damit alle regulären Mobilfunkteilnehmer bei Auslastung des Netzwerks gleichermaßen "benachteiligt" werden. Dies bedeutet, dass Teilnehmer mit einem Endgerät, bei dem die SIM/USIM-Karte lediglich eine Zuordnung zu einer der Klassen 0 bis 9 besitzt, gegebenenfalls zumindest temporär gesperrt werden und nicht auf das Mobilfunknetz zugreifen können. Für diese Endgeräte ist es daher nicht möglich, ankommende oder abgehende Gespräche aufzubauen.

Eine Möglichkeit der Realisierung der Teilnehmerpriorisierung ist unter der Netzfunktion "enhanced Multi-Level Precedence and Pre-emption" (eMLPP) bekannt und in der Spezifikation 3GPP TS 22.067 beschrieben. Sie gewährleistet auch im Falle einer Blockierung, beispielsweise durch Belegung aller Kanäle, einen Netzzugang, implementiert ein so genanntes Warteschlangenmanagement, bei dem Netzwerkressourcen prioritätsabhängig zur Verfügung gestellt werden, und regelt den Vorrang neuer Gespräche, beispielsweise eines Notrufes, gegenüber laufenden Gesprächen geringerer Priorität, welche durch Gespräche höherer Priorität verdrängt werden. Bei eMLPP sind bis zu sieben verschiedene Prioritätsstufen möglich, die durch eMLPP- Parameter definiert sind, mit denen eine einfache Zuordnung einer bestimmten Prioritätsstufe zu den Teilnehmern möglich ist. Die Parameter werden im Home Location Register (HLR), auf der SIM/USIM- Karte des Endgerätes und/oder dem Mobile Switching Center (MSC) hinterlegt.

Das eMLPP- Verfahren ermöglicht jedoch keine Gespräche zu Teilnehmern, die infolge des "Access Class Barring" nicht auf das Netzwerk zugreifen dürfen. Sie kann daher nur dann angewendet werden, wenn der angerufene Teilnehmer mit dem Netz kommunizieren darf. Anders betrachtet, ist es für einen Teilnehmer, dessen Endgerät durch das "Access Class Barring" gesperrt ist, auch durch Priorisierung des Gesprächs mittels der eMLPP-Funktionalität nicht möglich, mit dem Netzwerk zu kommunizieren.

Aus der US-Patentanmeldung 2007/0238454 A1 ist ein Verfahren zur Aufhebung einer Kommunikationsbeschränkung eines Mobilgerätes in einem Mobilfunknetzwerk beschrieben, so dass die Annahme eines priorisierten Anrufs erfolgen kann. Dabei wird ausgenutzt, dass das mobile Gerät auch während der Kommunikationsbeschränkung vom Netz an dieses gesendete Nachrichten, die allgemein als PAGING-Nachrichten bezeichnet werden, empfängt und überwacht. Eine derartige PAGING-Nachricht soll gemäß der US 2007/0238454 A1 entweder eine Prioritätsinformation enthalten oder von einer solchen begleitet sein. Ein Prozessiersystem des Mobilgerätes prüft die PAGING-Nachricht auf Vorhandensein einer derartigen Prioritätsinformation. Wird eine solche Prioritätsinformation erkannt, ignoriert das Mobilgerät die Kommunikationsbeschränkung, so dass der priorisierte Anruf angenommen werden kann.

Auch aus der WO 2004/072748 A2 ist ein Verfahren bekannt, dass die Entgegennahme von Notrufen im Falle einer Zugangsklassenbeschränkung ermöglicht. Das Verfahren sieht vor, dass ein Mobilgerät zunächst selbst einen Notruf mit der Zugangsklasse 10 an eine Notrufzentrale absetzt. Sofern das Mobilfunknetz entsprechende Notrufe der Klasse 10 durchlässt, werden dem Notruf ein entsprechender Übertragungskanal und ein Startzeitpunkt zugewiesen. Von diesem Zeitpunkt an, besteht für einen beschränkten Zeitraum die Möglichkeit, das Mobilgerät durch einen Anruf zu erreichen. Hierbei hilft das Mobilfunknetzwerk der Notrufzentrale, nach dem die Kommunikationsverbindung zwischen dem Mobilgerät und der Notrufzentrale etabliert ist, einen Rückruf von der Notrufzentrale zu dem Mobilgerät herzustellen, in dem es eine Telefonnummer bereitstellt, die mit dem Mobilgerät assoziiert ist. Empfängt das Mobilfunknetz dann während einer Klassenbeschränkung einen Rückruf von der Notrufzentrale mit der Telefonnummer, die das Mobilgerät identifiziert, leitet es eine PAGING-Nachricht an das Mobilgerät mit einer hohen Priorität weiter und etabliert eine Kommunikationsverbindung zwischen der Notrufzentrale und dem Mobilgerät. Gleichzeitig überwacht das Mobilgerät während des freigeschalteten Zeitraums eingehende PAGING-Nachrichten und diese enthaltende Zugangsklasseneinstellungen. Sobald es in einer PAGING-Nachricht einen an sich adressierten Anruf erkennt, prüft es zunächst, ob die Zugangsklasse 10 aktuell für Kommunikationsverbindungen berechtigt ist. Ist dies der Fall, wird zusätzlich geprüft, ob dem ankommenden Anruf eine hohe Priorität zugeordnet ist. Ist auch dies der Fall, wird auf die PAGING-Nachricht geantwortet und eine Kommunikationsverbindung mit der Notrufzentrale aufgebaut.

Nachteilig bei diesem Verfahren ist, dass eine Kommunikationsverbindung zu dem Mobilgerät lediglich von einer Notrufzentrale ermöglicht wird, und dass eingehende Anrufe am Mobilgerät während einer Zugangsklassenbeschränkung des Mobilfunknetzes nur dann möglich sind, wenn zuvor von dem Mobilgerät ein Notruf an die Notrufzentrale abgesetzt worden ist. Die ist umständlich und würde bedeuten, dass Notrufzentralen mit einer großen Menge von Notrufen mobiler Endgeräte überschwemmt werden, die inhaltlich keine Notrufe sind, sondern lediglich zur Freischaltung des entsprechenden Mobilgerätes dienen. Das Verfahren ist daher unpraktikabel und besonders nachteilig für Notrufzentralen.

Der vorliegenden Erfindung liegt daher die Aufgabe zugrunde, ein Verfahren zur Verfügung zu stellen, das den Teilnehmern eines Mobilfunknetzes, deren Access Klasse aufgrund einer temporären Überlast im Netzwerk gesperrt ist und die daher keinen Zugang zum Mobilfunknetzwerk haben, erlaubt, Anrufe hoher Dringlichkeit bzw. Priorität entgegennehmen zu können bzw. umgekehrt soll es möglich sein, ausgehend von einem priorisierten Mobilfunkendgerät eine Mobilfunkverbindung zu einem nicht priorisierten Mobilfunkendgerät auch im Falle einer Überlastsituation aufbauen zu können. Das Verfahren soll sich dabei mit geringem Arbeitsaufwand in bestehende Mobilfunknetze integrieren lassen.

Diese Aufgabe wird durch ein Verfahren mit den Merkmalen des Anspruchs 1 gelöst. Vorteilhafte Ausgestaltungen der Erfindung sind in den abhängigen Unteransprüchen gegeben.

Besonders vorteilhaft ist dabei, dass bei dem Verfahren zum Aufbau einer Mobilfunkverbindung in einem Mobilfunknetz, insbesondere in einem zellularen Mobilfunknetz im Falle einer wegen Überlast temporär eingeschränkten Mobilfunknetzwerkzugänglichkeit oder Mobilfunknetzwerkverfügbarkeit, zwischen einem priorisierten ersten Mobilfunkendgerät und einem nicht priorisierten zweiten Mobilfunkendgerät, wobei nicht priorisierte Mobilfunkendgeräte zumindest teilweise und zumindest temporär aufgrund der Überlastsituation gesperrt sind, bei welchem das erste, priorisierte Mobilfunkendgerät einen Rufaufbauversuch sendet, das Mobilfunknetz den Rufaufbauversuch als priorisierten Rufaufbauversuch erkennt und gegenüber Rufaufbauversuchen anderer nicht priorisierter Mobilfunkendgeräte bevorzugt und an das zweite, nicht priorisierte Mobilfunkendgerät übermittelt, die Sperrung des zweiten Mobilfunkendgerätes zumindest temporär netzseitig aufgehoben wird, so dass der eingehende Anruf von dem zweiten Mobilfunkendgerät annehmbar ist und die Mobilfunkverbindung aufgebaut wird, wobei das zweite Mobilfunkendgerät einer bestimmten, nicht priorisierten Klasse zugeordnet ist und die gesamte Klasse zumindest temporär für den Zugang zum Mobilfunknetz gesperrt ist, und eine Aufhebung der Sperrung dieser Klasse zumindest temporär erfolgt.

Mobilfunknetze können beispielsweise GSM- und/ oder UMTS-Netze sein. Ferner können priorisierte Teilnehmer beispielsweise Rettungskräfte wie Feuerwehr, Polizei, aber auch Bedienstete öffentlicher Versorgungseinrichtungen und/ oder des Mobilfunknetzbetreibers sein. Es kann sich dabei um eine natürliche Person als auch um eine Einrichtung, wie z.B. eine Polizeistation oder eine Feuerwehrwache handeln. Priorisierte Teilnehmer, d.h. priorisierte Endgeräte dieser Teilnehmer, sind damit solche Mobilfunkteilnehmer deren Anrufe eine besonders hohe Dringlichkeit besitzen und gegenüber anderen gewöhnlichen Mobilfunkteilnehmern zu bevorzugen sind. Priorisierte Anrufe sind dabei Gesprächswünsche priorisierter Teilnehmer, d.h. dass der Rufaufbauversuch von einem priorisierten Endgerät ausgeht.

Sofern in dieser Beschreibung von einem priorisierten Teilnehmer die Rede ist, ist technisch ein Endgerät, welches als priorisiert klassifiziert ist, darunter zu verstehen. Umgekehrt ist ein Teilnehmer im Allgemeinen als Synonym für dessen Mobilfunkendgerät im Allgemeinen aufzufassen.

Damit das Mobilfunknetz priorisierte Anrufe erkennt, muss spätestens vor dem Gesprächsaufbau mit dem nicht priorisierten Teilnehmer bekannt sein, dass es sich um einen priorisierten Anruf handelt. Dies kann über verschiedene Möglichkeiten erfolgen, eine Möglichkeit ist das HLR Kundenprofil. Bei einem ankommenden Gesprächswunsch sendet das Netz zunächst eine Nachricht an das Mobilfunkendgerät die allgemein als eine PAGING-Nachricht bezeichnet wird.

Die PAGING-Nachricht kann bereits eine Prioritätsinformation enthalten, die ihr vom Mobilfunknetz hinzugefügt wird und mit der der anrufende Teilnehmer als priorisierter Teilnehmer identifizierbar ist. Diese Prioritätsinformation kann nach dem eMLPP Verfahren gewählt werden. Alternativ kann auch der rufende Teilnehmer seine Access Klasse dem Netz mitteilen und diese Information als Prioritätsinformation verwendet werden. Weiterhin kann der PAGING-Nachricht auch ein anderes Informationselement hinzugefügt werden, dass sich von dem dem eMLPP-Informationselement unterscheidet. Alternativ zu dem Informationselement kann das Mobilfunknetz den priorisierten Anruf auch auf andere Weise erkennen, beispielsweise durch Überprüfung der Eintragung im HLR- Kundenprofil (Home Location Register), welches teilnehmerspezifische Daten enthält.

Hat das Mobilfunknetz erkannt, dass es sich um einen priorisierten Anruf handelt, muss es sicherstellen, dass die PAGING-Nachricht aufgrund der Lastsituation nicht gelöscht oder verzögert wird. Das Mobilfunknetz muss die priorisierte PAGING-Nachricht daher bevorzugt behandeln. Dies kann durch Anwendung der eMLPP-Funktionalität erfolgen, auf die hier nicht weiter eingegangen werden soll.

Hat das angerufene Endgerät die priorisierte PAGING-Nachricht erhalten und ist die Access Klasse der SIM/USIM- Karte des Endgerätes des angerufenen Teilnehmers gesperrt, bestehen insbesondere zwei Möglichkeiten, den Gesprächsaufbau erfolgreich weiter zu führen.

Die erste Möglichkeit ist eine temporäre, d.h. zeitlich begrenzte Deaktivierung der Sperrung des zweiten Mobilfunkendgerätes, d.h. die netzseitige Aufhebung der Access Klassen Sperrung. Erfindungsgemäß wird daher zunächst vorgeschlagen, dass zum Aufbau einer Telekommunikationsverbindung in einem Mobilfunknetz zwischen einem priorisierten ersten und einem nicht priorisierten zweiten Teilnehmer des Mobilfunknetzes im Falle einer wegen Überlast temporär eingeschränkten Mobilfunknetzzugänglichkeit der erste, priorisierte Teilnehmer einen Zugangswunsch zum Aufbau einer Telekommunikationsverbindung an das Mobilfunknetz durch Senden einer Nachricht stellt, das Mobilfunknetz den priorisierten Zugangswunsch erkennt und gegenüber Zugangswünschen anderer Teilnehmer bevorzugt an den zweiten Teilnehmer übermittelt, dessen Mobilfunkendgerät für einen Zugang zum Mobilfunknetz temporär gesperrt sein kann, und die Sperrung des Mobilfunkendgerätes des zweiten Teilnehmers zumindest temporär aufgehoben wird, so dass der eingehende Anruf von dem zweiten Teilnehmer zum Aufbau einer Telekommunikationsverbindung annehmbar ist.

Wenn dem Netz bekannt ist, dass durch die priorisierte PAGING-Nachricht ein priorisierter Anruf erfolgt, der aufgrund der Tatsache, dass die SIM/USIM- Karte des Endgerätes des angerufenen Teilnehmers einer gesperrten Klasse zugeordnet ist und dieser daher keine Interaktion mit dem Mobilfunknetz vornehmen kann, der Anruf folglich nicht vom angerufenen Teilnehmer angenommen werden kann, kann das Netz die Access Klassen Sperrung aufheben. Die Aufhebung der Sperrung kann für alle Klassen erfolgen. Dies kann insbesondere bei den heutigen Mobilfunknetzen ohne Weiteres angewendet werden, da ihnen die Access Klasse des angerufenen Teilnehmers nicht bekannt ist, so dass das Netz jede Klasse freigeben muss, um dem angerufenen Teilnehmer die Entgegennahme des Anrufs zu ermöglichen. Der Vorteil dieses Verfahrens liegt darin, dass es mit minimalem Aufwand und unter Benutzung bestehender Endgeräte im Mobilfunknetz implementiert werden kann, da es endgeräteunabhängig ist.

Das Mobilfunknetz hätte nach der Öffnung der Klassen kurzfristig wieder eine gesteigerte Last zu bedienen, da nunmehr alle Teilnehmer wieder auf das Netz zugreifen dürfen. Dieser Problematik kann durch zwei Maßnahmen begegnet werden. Zum einen kann die Last dadurch beschränkt werden, dass sämtliche Gesprächswünsche oder sonstige Netzzugriffe, beispielsweise durch Senden elektronischer Kurznachrichten oder Internetzugriffe, abgewiesen oder ignoriert werden und ausschließlich priorisierte Zugangswünsche entgegengenommen werden und priorisierte Kommunikation aufgebaut wird. Dies hätte jedoch zur Folge, dass die Netzauslastung zumindest in der/ den den priorisierten Gesprächsaufbau bewerkstellenden Zelle(n) des Netzes um ein unnötig hohes Maß reduziert wird, da die dortigen Netzwerkressourcen in diesem Fall nicht vollständig ausgenutzt werden.

Eine weitere Möglichkeit, die den Gesprächswünschen der Teilnehmer angemessen Rechnung trägt, besteht darin, lediglich diejenige Access Klasse zu öffnen, die der SIM/USIM- Karte des Endgerätes des Teilnehmers zugeordnet ist. Auf diese Weise kann das zufällige Schließen der anderen Access Klassen weiterhin betrieben werden und die Last im Netz adäquat kontrolliert und reduziert werden und gleichzeitig dem nicht priorisierten Teilnehmer mit Sicherheit die Berechtigung eingeräumt werden, den priorisierten Anruf des ersten Teilnehmers entgegenzunehmen. Eine Möglichkeit herauszufinden, welche Access Klasse dem angerufenen Teilnehmer zugeordnet ist, kann beispielsweise darin bestehen, auf der Grundlage der gewählten Mobilfunknummer eine Überprüfung des angerufenen Teilnehmers im HLR-Kundenprofil (Home Location Register) durchzuführen, welches teilnehmerspezifische Daten enthält. Auf diese Weise ist es möglich, den nicht priorisierten Teilnehmer gezielt freizuschalten ohne dabei die Netzlast zu steigern

Die Aufhebung der Sperrung kann vorzugsweise für die Dauer der aktiven Kommunikationsverbindung vorgenommen werden.

Die zweite Möglichkeit, den Gesprächsaufbau erfolgreich weiterzuführen, ist die Deaktivierung der Access Klassen Restriktion im Endgerät. Es wird daher vorgeschlagen, dass das Mobilfunkendgerät des angerufenen Teilnehmers derart ausgestaltet ist, dass es selbst erkennt, dass es Empfänger eines priorisierten Gesprächswunschs ist und seine Sperrung zumindest temporär ignoriert, so dass der eingehende Anruf von dem zweiten Teilnehmer zum Aufbau einer Telekommunikationsverbindung annehmbar ist. Die Erkennung des priorisierten Anrufs kann beispielsweise dadurch erfolgen, dass das Endgerät die PAGING-Nachricht erhält und deren Priorisierung erkennt. Auf diese Weise ist es möglich, gezielt den nicht priorisierten Teilnehmer zur Annahme des priorisierten Gesprächs zu berechtigen ohne dabei die Netzlast oder weitere Teilnehmer zu beeinflussen.

Das Ignorieren der Sperrung kann vorzugsweise für die Dauer der aktiven Kommunikationsverbindung erfolgen.

Für die Realisierung der beiden Verfahren ist es zweckdienlich, zunächst herauszufinden, ob der angerufene Teilnehmer einer gesperrten Access Klasse zugeordnet ist. Ist dies nicht der Fall, erübrigen sich weitere Maßnahmen, insbesondere das Öffnen sämtlicher Access Klassen, da dieser Teilnehmer auch im Falle einer Netzüberlastung zumindest noch für eine gewisse Zeit auf das Mobilfunknetz zugreifen darf. Es kann daher vor der Aufhebung der Sperrung vorgesehen werden, dass festgestellt wird, ob und dass das Mobilfunkendgerät des zweiten Teilnehmers für den Zugang zum Mobilfunknetz gesperrt ist. Diese Feststellung kann beispielsweise dadurch erfolgen, dass das Endgerät des zweiten Teilnehmers die Übermittlung der Nachricht nicht bestätigt oder dass das Mobilfunknetz eine Ermittlung der Access Klasse des zweiten Teilnehmers im Home Location Register (HLR) vornimmt und mit den aktuell gesperrten Klassen vergleicht.

Es sei darauf hingewiesen, dass im Sinne dieser Erfindung ein Mobilfunknetz Einrichtungen aufweist, wie Sende- und Empfangseinheiten, Kommunikationsverbindungen, Zugangseinrichtungen sowie Steuer- und Kontrolleinrichtungen, einschließlich entsprechender Programme zur Steuerung und Kontrolle der Kommunikation innerhalb des Netzwerks, die das Erkennen priorisierter Anrufe, den Empfang und die Weiterleitung von PAGING-Nachrichten, das Hinzufügen von Prioritäts-Informationselementen zu derartigen Nachrichten, sowie die bevorzugte Behandlung priorisierter Zugangs- und Gesprächswünsche durchführen, die Sperrung und Freigabe von Access-Klassen steuern und die weiteren beschriebenen Maßnahmen vorzunehmen. Im Sinne der Erfindung wird daher allgemein davon gesprochen, dass das Mobilfunknetz in der Lage ist, die entsprechenden Maßnahmen vorzunehmen. Es versteht sich, dass im konkreten Fall die entsprechenden Komponenten zur Vornahme der Maßnahmen vorgesehen sind.

## Patentansprüche

1. Verfahren zum Aufbau einer Mobilfunkverbindung in einem Mobilfunknetz, insbesondere in einem zellularen Mobilfunknetz im Falle einer wegen Überlast temporär eingeschränkten Mobilfunknetzwerkzugänglichkeit oder Mobilfunknetzwerkverfügbarkeit, zwischen einem priorisierten ersten Mobilfunkendgerät und einem nicht priorisierten zweiten Mobilfunkendgerät, wobei nicht priorisierte Mobilfunkendgeräte zumindest teilweise und zumindest temporär aufgrund der Überlastsituation gesperrt sind, bei welchem das erste, priorisierte Mobilfunkendgerät einen Rufaufbauversuch sendet, das Mobilfunknetz den Rufaufbauversuch als priorisierten Rufaufbauversuch erkennt und gegenüber Rufaufbauversuchen anderer nicht priorisierter Mobilfunkendgeräte bevorzugt und an das zweite, nicht priorisierte Mobilfunkendgerät übermittelt, wobei die Sperrung des zweiten Mobilfunkendgerätes zumindest temporär netzseitig aufgehoben wird, so dass der eingehende Anruf von dem zweiten Mobilfunkendgerät annehmbar ist und die Mobilfunkverbindung aufgebaut wird, wobei das zweite Mobilfunkendgerät einer bestimmten, nicht priorisierten Klasse zugeordnet ist und die gesamte Klasse zumindest temporär für den Zugang zum Mobilfunknetz gesperrt ist, **dadurch gekennzeichnet, dass** eine Aufhebung der Sperrung dieser Klasse zumindest temporär erfolgt.

2. Verfahren nach Anspruch 1, **dadurch gekennzeichnet, dass** nach der Aufhebung der Sperrung von dem Mobilfunknetz nur priorisierte Rufaufbauversuche durch das Mobilfunknetz und/oder durch zweite Mobilfunkendgeräte angenommen werden.

3. Verfahren nach einem der vorherigen Ansprüche, **dadurch gekennzeichnet, dass** die Sperrung für die Dauer der aktiven Telekommunikationsverbindung aufgehoben wird.

4. Verfahren nach einem der vorherigen Ansprüche, **dadurch gekennzeichnet, dass** die Erkennung der Priorisierung des ersten Mobilfunkendgerätes durch Auswertung einer Prioritätsinformation des Rufaufbauversuches erfolgt.

5. Verfahren nach einem der vorherigen Ansprüche, **dadurch gekennzeichnet, dass** eine Ignorierung einer Zugangssperre seitens des zweiten Mobilfunkendgerätes für die Dauer der aktiven Mobilfunkverbindung erfolgt.

6. Verfahren nach einem der vorherigen Ansprüche, **dadurch gekennzeichnet, dass** die Nachricht eine Prioritätsinformation trägt, anhand derer das Mobilfunknetz und/oder das zweite Mobilfunkendgerät den priorisierten Rufaufbauversuch erkennt.

7. Verfahren nach einem der vorherigen Ansprüche, **dadurch gekennzeichnet, dass** das Mobilfunknetz eine Überprüfung des Home Location Registers durchführt, anhand dessen die Priorisierung des ersten Mobilfunkendgerätes erkannt wird.

## Claims

1. Method for setting up a mobile radio link in a mobile radio network, especially in a cellular mobile radio network in the case of a mobile radio network accessibility or mobile radio network availability which is restricted temporarily because of overload, between a prioritized first mobile radio terminal and a non-prioritized second mobile radio terminal, non-prioritized mobile radio terminals being blocked at least partially and at least temporarily due to the overload situation, in which the first, prioritized mobile radio terminal sends a call set up attempt, the mobile radio network recognizes the call set up attempt as prioritized call set up attempt and prefers it compared with call set up attempts of other non-prioritized mobile radio terminals and transmits it to the second, non-prioritized mobile radio terminal, wherein the blocking of the second mobile radio terminal is cancelled at least temporarily by the network so that the incoming call can be accepted by the second mobile radio terminal and the mobile radio link is set up, the second mobile radio terminal being allocated to a particular non-prioritized class and the entire class being blocked at least temporarily for access to the mobile radio network, **characterized in that** the blocking of this class is cancelled at least temporarily.

2. Method according to Claim 1, **characterized in that** after the cancellation of the blocking by the mobile radio network, only prioritized call set up attempts are accepted by the mobile radio network and/or by second mobile radio terminals.

3. Method according to one of the preceding claims, **characterized in that** the blocking is cancelled for the duration of the active telecommunication link.

4. Method according to one of the preceding claims, **characterized in that** the prioritization of the first mobile radio terminal is recognized by evaluating priority information of the call set up attempt.

5. Method according to one of the preceding claims, **characterized in that** an access block is ignored by the second mobile radio terminal for the duration of the active mobile radio link.

6. Method according to one of the preceding claims, **characterized in that** the message carries priority information by means of which the mobile radio network and/or the second mobile radio terminal recognizes the prioritized call set up attempt.

7. Method according to one of the preceding claims, **characterized in that** the mobile radio network checks the home location register by means of which the prioritization of the first mobile radio terminal is recognized.

## Revendications

1. Procédé d'établissement d'une liaison de radiocommunication mobile dans un réseau de radiocommunication mobile, notamment dans un réseau de radiocommunication mobile cellulaire dans le cas d'une accessibilité du réseau de radiocommunication mobile ou d'une disponibilité du réseau de radiocommunication mobile temporairement restreinte en raison d'une surcharge, entre un premier terminal de radiocommunication mobile ayant priorité et un deuxième terminal de radiocommunication mobile n'ayant pas priorité, les terminaux de radiocommunication mobile n'ayant pas priorité étant au moins partiellement et au moins temporairement bloqués en raison de la situation de surcharge, procédé selon lequel le premier terminal de radiocommunication mobile ayant priorité émet une tentative d'établissement d'appel, le réseau de radiocommunication mobile reconnaît la tentative d'établissement d'appel comme une tentative d'établissement d'appel ayant priorité et la communique avec préférence par rapport aux tentatives d'établissement d'appel d'autres terminaux de radiocommunication mobile n'ayant pas priorité et au deuxième terminal de radiocommunication mobile n'ayant pas priorité, le blocage du deuxième terminal de radiocommunication mobile étant annulé au moins temporairement du côté du réseau, de sorte que l'appel entrant puisse être accepté par le deuxième terminal de radiocommunication mobile et que la liaison de radiocommunication mobile soit établie, le deuxième terminal de radiocommunication mobile étant affecté à une classe donnée n'ayant pas priorité et l'ensemble de la classe étant bloquée au moins temporairement pour l'accès au réseau de radiocommunication mobile, **caractérisé en ce qu'**une annulation du blocage de cette classe a lieu au moins temporairement.

2. Procédé selon la revendication 1, **caractérisé en ce qu'**après l'annulation du blocage du réseau de radiocommunication mobile, seules sont acceptées par le réseau de radiocommunication mobile et/ou par des deuxièmes terminaux de radiocommunication mobile les tentatives d'établissement d'appel ayant priorité.

3. Procédé selon l'une des revendications précédentes, **caractérisé en ce que** le blocage est annulé pendant la durée de la liaison de télécommunication active.

4. Procédé selon l'une des revendications précédentes, **caractérisé en ce que** la reconnaissance du caractère prioritaire du premier terminal de radiocommunication mobile est effectuée par une interprétation d'une information de priorité de la tentative d'établissement d'appel.

5. Procédé selon l'une des revendications précédentes, **caractérisé en ce que** le deuxième terminal de radiocommunication mobile ignore un blocage d'accès pendant la durée de la liaison de radiocommunication mobile active.

6. Procédé selon l'une des revendications précédentes, **caractérisé en ce que** le message transporte une information de priorité à l'aide de laquelle le réseau de radiocommunication mobile et/ou le deuxième terminal de radiocommunication mobile reconnaît la tentative d'établissement d'appel ayant priorité.

7. Procédé selon l'une des revendications précédentes, **caractérisé en ce que** le réseau de radiocommunication mobile effectue un contrôle du registre de localisation et de rattachement à l'aide duquel est reconnu le caractère prioritaire du premier terminal de radiocommunication mobile.
